# EUROPÄISCHE PATENTSCHRIFT

(11) **EP 1 764 247 B1**
(45) Veröffentlichungstag und Bekanntmachung des Hinweises auf die Patenterteilung: **28.10.2009**
(21) Anmeldenummer: 06019018.8
(22) Anmeldetag: 12.09.2006
(51) Int. Cl.: B60J 5/10

(54) **Hecköffnungssystem für ein Kraftfahrzeug**
Automobile vehicle back opening system
Système d'ouverture arrière pour véhicule automobile

(30) Priorität: 17.09.2005 DE 102005044569
(43) Veröffentlichungstag der Anmeldung: 21.03.2007
(73) Patentinhaber: GM Global Technology Operations, Inc., Detroit, MI 48265-3000 (US)
(72) Erfinder: Wessollek, Hans-Georg, 55442 Stromberg (DE)
(74) Vertreter: Daniel, Ulrich W.P.

(56) Entgegenhaltungen:
- EP-A- 1 332 918
- DE-A1- 1 630 488
- US-A1- 2003 122 396
- US-A1- 2004 174 035

## Beschreibung

Die Erfindung betrifft ein Hecköffnungssystem für ein Kraftfahrzeug gemäß den Merkmalen des Oberbegriffs des Anspruchs 1.

Derartige Hecköffnungssysteme kommen in nahezu jedem Kraftfahrzeug zum Einsatz, insbesondere bei Kraftfahrzeugen mit einem im Heck des Kraftfahrzeugs befindlichen Stauraum.

Allgemein bekannt sind Hecköffnungssysteme, welche im Heckbereich eine durch eine umgebene Karosserie gebildete Öffnung aufweisen, wobei an der umgebenden Karosserie im Bereich der Öffnung schwenkbar Hecktüren oder Heckklappen angeordnet sind. Diese Heckklappen oder Hecktüren lassen sich dann je nach Ausführung nur um eine Drehachse aufschwenken, entweder um eine vertikale Achse oder um eine horizontale Achse.

Aus der US 2004/01/0174035 A1 welche dem Oberbegriff des Anspruch 1 entspricht ist beispielsweise ein Hecköffnungssystem bekannt, welches sich ausschließlich um seine horizontale Achse schwenken lässt.

Bei der bekannten Lösung tritt der Nachteil auf, dass ein Öffnen der Heckklappen oder Hecktüren jeweils nur um eine Drehachse möglich ist und somit je nach Beladungsfall ein optimaler Zugang sowie eine optimale Lagerung von zu lagernden Objekten, insbesondere von Objekten die aufgrund ihres Platzbedarfes nicht komplett in dem Stauraum Platz finden, nicht gegeben ist.

Es ist daher eine Aufgabe der vorliegenden Erfindung ein Hecköffnungssystem für Kraftfahrzeuge zu schaffen, bei dem ein Höchstmaß an Flexibilität bei der Öffnung des Heckbereichs eines Kraftfahrzeugs erreicht wird.

Diese Aufgabe wird von einem Hecköffnungssystem gemäß dem Oberbegriff des Anspruchs 1 in Verbindung mit dessen kennzeichnenden Merkmalen gelöst. Vorteilhafte Weiterbildung der Erfindung sind in den hierauf abhängigen Ansprüchen angegeben.

Die Erfindung schließt die technische Lehre ein, dass ein Hecköffnungssystem für ein Kraftfahrzeug einen Heckbereich mit einer durch einen Karosseriebereich umgebenden, zu verschließenden Öffnung, mindestens eine mit dem Heckbereich koppelbare Verschlusseinrichtung mit mindestens einem Verschlusselement ausgewählt aus der Gruppe umfassend Hecktüren, Heckklappen und dergleichen, zum Öffnen bzw. Verschließen der Öffnung des Heckbereichs umfasst, wobei zwischen Verschlusseinrichtung und Heckbereich eine Rahmenvorrichtung bewegbar an dem Heckbereich gekoppelt angeordnet ist, über welchen die Verschlusseinrichtung mit dem Heckbereich gekoppelt ist, um ein Öffnen bzw. Verschließen der Öffnung über ein Bewegen der Rahmenvorrichtung und/oder des Verschlusselements zu realisieren. Gemäß der erfindungsgemäßen Lösung ist die Rahmenvorrichtung dabei über mindestens ein erstes Gelenk umfassend Scharnierelemente und dergleichen bewegbar an dem Karosseriebereich gekoppelt und die Verschlusseinrichtung ist über mindestens ein zweites Gelenk umfassend Scharnierelemente und dergleichen bewegbar an die Rahmenvorrichtung gekoppelt, wobei das erste Gelenk eine in eine andere Richtung ausgebildete Drehachse aufweist als das zweite Gelenk.

Diese Lösung bietet den Vorteil, dass Rahmenvorrichtung und Verschlusseinrichtung jeweils über verschiedene Gelenke gekoppelt sind. Die Gelenke weisen dabei vorzugsweise eine Drehachse nach Art eines Scharniers auf, wobei die Drehachse vorzugsweise quer zur Fahrzeuglängsachse verlaufen zum Beispiel vertikal oder horizontal. Denkbar ist aber auch, dass die Gelenke ein Öffnen Schwenken um eine Drehachse, welche in Richtung Kraftfahrzeuglängsachse ausgerichtet ist, ermöglichen. Somit ist die Verschlusseinrichtung um eine Drehachse schwenkbar zu öffnen. Auch ist eine schräge Drehachse vorstellbar, welche beispielsweise diagonal verläuft, um ein diagonales Schwenken zu ermöglichen. Die Rahmenvorrichtung ist ebenfalls über Gelenke gekoppelt, welche ähnlich wie zuvor beschrieben eine in verschiedene Richtungen ausgebildete Drehachse aufweisen können. Vorzugsweise weisen die Gelenke der Rahmenvorrichtung eine in eine andere Richtung ausgebildete Drehachse auf, als die Gelenke der Verschlusselemente. So sind die Verschlusselemente um eine Drehachse in eine erste Richtung schwenkbar und die Rahmenvorrichtung ist über eine zweite Drehachse in eine andere Richtung zu öffnen. Hierdurch wird ein Höchstmaß an Flexibilität bei der Öffnung des Heckbereichs eines Kraftfahrzeugs ermöglicht.

Das Kraftfahrzeug kann sowohl als Kombi, Fünftürer, Lieferwagen, Sportwagen Van und auch Mini-Van ausgebildet sein, das heißt als jedes Kraftfahrzeug mit einer entsprechenden Heckbauweise.

Der Heckbereich des Kraftfahrzeugs weist dabei eine Öffnung auf, welche von einem Karosseriebereich umgeben ist und somit durch diesen gebildet wird. Die Verschlusseinrichtung umfasst mindestens ein Verschlusselement, welches als Heckklappe, Hecktür, Kofferraumklappe und dergleichen ausgebildet sein kann. Die Verschlusseinrichtung ist mit der Rahmenvorrichtung gekoppelt. Die Rahmenvorrichtung wiederum ist mit den die Öffnung umgebenden Karosseriebereich gekoppelt. Die Kopplung erfolgt üblicherweise über Scharniere oder Scharnierelemente. Jedoch sind auch andere Kopplungen möglich, beispielsweise über ein Drehgelenk.

Die Rahmenvorrichtung ist vorzugsweise als umlaufender Rahmen ausgebildet. Dieser umgibt die gesamte zu verschließende Öffnung des Heckbereichs und ist an dem Karosseriebereich angeordnet. Dabei ist der Rahmen an den Karosseriebereich so angeordnet, dass dieser den Gesamteindruck des Kraftfahrzeugs nicht beeinflusst und insbesondere nicht über die Karosserie hinausragt. Vorzugsweise ist der Rahmen einteilig ausgebildet wodurch sich eine einfache Montage gewährleisten lässt. Durch die spezielle Anordnung ist ein flexibler Zugang des im Heckbereich befindlichen Lade- oder Stauraums des Kraftfahrzeugs möglich, so z.B. in engen Parkzuständen (Tiefgarage etc.), eingeschränkten Höhenverhältnissen (Garagendecke etc.) oder zum Beladen von Kleinteilen, bei denen nicht die komplette Klappe geöffnet werden muss, gewährleistet.

Bevorzugt ist, dass die Rahmenvorrichtung über mindestens ein erstes Scharnierelement an dem Karosseriebereich gekoppelt ist. Über ein erstes Scharnierelement ist eine sichere, mit wenig Aufwand verbundene und bekannte Ankopplung der Rahmenvorrichtung an dem Karosseriebereich möglich. Insbesondere lässt sich das Scharnierelement ohne hohen Platzbedarf anbringen. Vorzugsweise ist die Rahmenvorrichtung über mindestens zwei Scharnierelemente mit dem Karosseriebereich gekoppelt.

Bevorzugt ist auch, dass die Verschlusseinrichtung über mindestens ein zweites Scharnierelement an die Rahmenvorrichtung gekoppelt ist. Hierdurch ist zum Einen die Kopplung der Verschlusseinrichtung an die Rahmenvorrichtung und die Kopplung der Rahmenvorrichtung an den Karosseriebereich unabhängig voneinander. Insofern lässt sich die Kopplung jeweils unterschiedlich gestalten.

Weiter bevorzugt ist, dass das erste Scharnierelement an einem oberen bzw. unteren Bereich des Karosseriebereichs angeordnet ist, um ein Schwenken der Rahmenvorrichtung nach oben bzw. nach unten zu realisieren. Hierdurch kann die Rahmenvorrichtung mitsamt der damit verbundenen Verschlusseinrichtung als Gesamtes einfach nach oben bzw. nach unten geschwenkt werden. Bei einer Teilung der Verschlusseinrichtung, lässt sich der obere Teil in einem oberen Bereich des Karosseriebereichs anordnen und der untere Teil in einem unteren Teil des Karosseriebereichs. Somit lassen sich dann der obere Teil nach oben und der untere Teil nach unten aufklappen. Dies ermöglicht gerade in beengten Situationen einen verbesserten Zugang zum Lade- oder Stauraum. Zudem ist bevorzugt, dass das erste und/oder das zweite Scharnierelement ausgewählt ist aus der Gruppe der Scharniere umfassend eindrehende als auch aushebende Scharniere. Diese Scharnierarten sind allgemein bekannt und gewährleisten eine zuverlässige und sichere Kopplung der zu koppelnden Bauteile. Zudem bauen die Scharniere klein, und sind somit platzsparend und das Gesamtbild nicht beeinträchtigend einsetzbar.

Auch bevorzugt ist, dass die Verschlusseinrichtung eine Teilung durch mindestens zwei Verschlusselemente umfasst. Hierdurch lässt sich der für das Öffnen bzw. Schließen benötigte Raum verringern. Zudem ist eine teilweise Öffnung bzw. Schließen möglich.

Eine Ausführungsform sieht vor, dass die Teilung der Verschlusseinrichtung horizontal, vertikal, symmetrisch und/oder asymmetrisch ausgebildet sein kann. Hierdurch lässt sich eine individuell anpassbare Verschlusseinrichtung gestalten, welche je nach Beladungsfall einen optimalen Zugang zum Stauraum bietet. Die Teilung kann die Verschlusseinrichtung beliebig teilen. Bevorzugt ist eine Zweiteilung, wobei diese auch mit einer mittigen Türfuge ausgebildet sein kann.

Bevorzugt ist auch, dass das Verschlusselement als umgreifendes und/oder als eingelegtes Verschlusselement ausbildbar ist. Somit lässt sich das Verschlusselement optisch gut in das Gesamtbild des Kraftfahrzeugs einbinden.

Weiter bevorzugt ist, dass jedes Verschlusselement einzeln schwenkbar an der Rahmenvorrichtung gekoppelt ist. Auf diese Weise kann je nach Bedarf nur ein einzelnes Verschlusselement von mehreren geöffnet werden. Dies ermöglicht den bestmöglichen Zugang zum Stau- bzw. Laderaum. Bevorzugt ist, dass ein Kraftfahrzeug ein Heckbereich gemäß der vorliegenden Erfindung umfasst.

Weitere die Erfindung verbessernde Maßnahmen sind in den Unteransprüchen angegeben oder werden nachstehend gemeinsam mit der Beschreibung eines oder mehrerer bevorzugter Ausführungsbeispiele der Erfindung anhand der Figuren näher dargestellt. Es zeigt:
- Fig. 1: Einen Ausschnitt eines Kraftfahrzeugs (KFZ) des Typs Van in perspektivischer Ansicht mit zwei Hecktüren im verschlossenen Zustand,
- Fig. 2: das KFZ gemäß Fig. 1 mit beiden Hecktüren geöffnet,
- Fig. 3: das KFZ gemäß Fig. 1 mit nach oben geschwenktem Rahmen,
- Fig. 4: einen Ausschnitt eines KFZ des Typs Kombi mit verschlossenem Heckbereich,
- Fig. 5: das KFZ gemäß Fig. 4 mit einer nach oben geöffneten Heckklappe,
- Fig. 6: das KFZ gemäß Fig. 4 mit beiden Heckklappen geöffnet und
- Fig. 7: das KFZ gemäß Fig. 4 mit nach oben geschwenktem Rahmen.

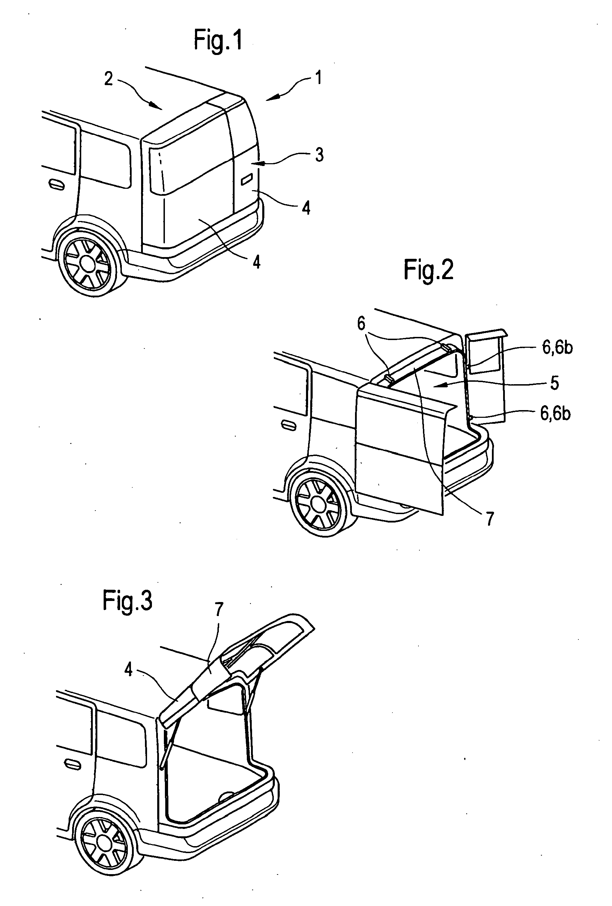

Fig. 1 zeigt einen Ausschnitt eines als Van ausgebildeten Kraftfahrzeugs mit einem erfindungsgemäßen Hecköffnungssystem 1. Insbesondere zeigt Fig. 1 den hinteren Bereich oder den Heckbereich 2, in dem das erfindungsgemäße Hecköffnungssystem 1 angeordnet ist.
Das Hecköffnungssystem 1 umfasst den Heckbereich 2, welcher eine Öffnung (hier nicht dargestellt) aufweist. Die Öffnung wird durch einen umgebenen Karosseriebereich begrenzt. Durch diese Öffnung ist ein Zugriff von außerhalb des KFZ auf einen im hinteren Teil oder Heckbereich des Kraftfahrzeugs befindlichen Stau- oder
Laderaum gegeben. In Fig. 1 ist diese Öffnung mittels einer Verschlusseinrichtung 3 verschlossen. Die Verschlusseinrichtung 3 umfasst vorliegend zwei Verschlusselemente 4, welche hier als Hecktüren ausgebildet sind. Dabei ist die Verschlusseinrichtung 3 asymmetrisch vertikal geteilt, und weist somit zwei ungleiche Hecktüren auf. Die Hecktüren sind mittels Scharnieren drehbar um eine vertikale Achse der Scharniere mit einer Rahmenvorrichtung wie in Fig. 2 dargestellt gekoppelt.

In Fig. 2 ist das Hecköffnungssystem geöffnet dargestellt. Beide Hecktüren sind um ihre vertikale Achse nach außen geschwenkt, wodurch ein Zugriff durch die Öffnung 5 zum Stauraum bzw. Laderaum gegeben ist. Die Kopplung der bewegbaren Teile des Hecköffnungssystems erfolgt im Wesentlichen über Gelenke 6. Die Rahmenvorrichtung 7 ist an dem die Öffnung umgebenden Karosseriebereich angeordnet. Die Anordnung der Rahmenvorrichtung 7 an den Karosseriebereich erfolgt über als Scharnierelemente ausgebildete erste Gelenke 6a, wie in Fig. 3 ersichtlich. Die ersten Gelenke weisen eine horizontale Drehachse auf, über welche die Rahmenvorrichtung 7 schwenkbar ist. In Fig. 2 ist erkennbar, dass die Hecktüren über zwei als Scharniere ausgebildete zweite Gelenke 6b drehbar um eine vertikale Achse an einer Rahmenvorrichtung angeordnet sind.

In Fig. 3 ist das Hecköffnungssystem in einer weiteren geöffneten Position dargestellt. Hier sind jedoch nicht die einzelnen Verschlusselemente 4 um ihre Drehachse geschwenkt, sondern die als umfassende Rahmenvorrichtung ausgebildete Rahmenvorrichtung 7 ist um eine horizontale Drehachse nach oben geschwenkt und bietet so vollen Zugriff auf den Stauraum des KFZ. Der Rahmen bzw. die Rahmenvorrichtung ist über Scharniere in einem oberen Bereich des Karosseriebereichs mit diesem verbunden. Bei diesem Öffnungsfall müssen die einzelnen Verschlusselemente 4 nicht geöffnet werden, um einen vollen Zugriff auf den Stau- bzw. Laderaum des KFZ zu ermöglichen.

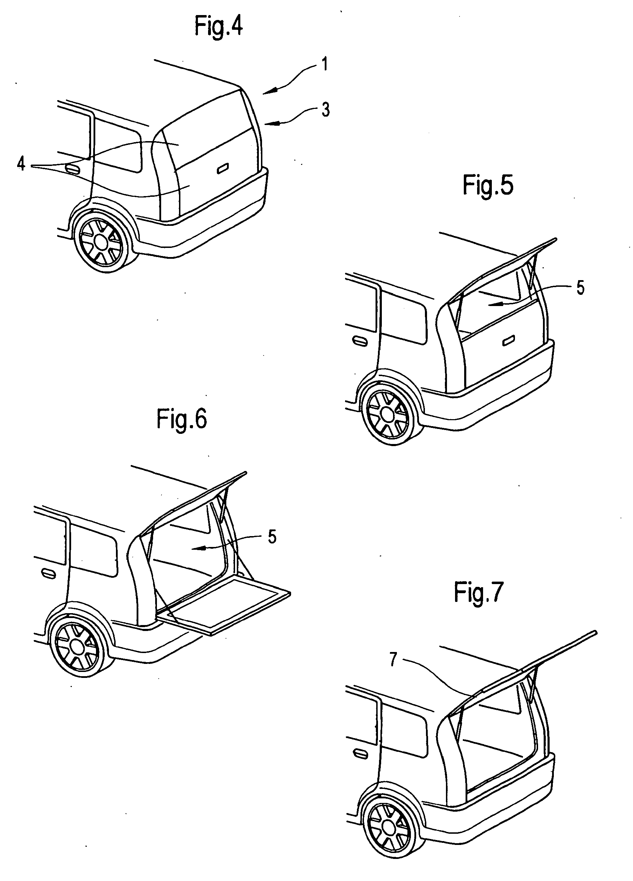

Fig. 4 zeigt nun ein als Kombi ausgeführtes Kraftfahrzeug. Das Hecköffnungssystem 1 in Fig. 4 weist ebenfalls wie das in Fig. 1 bis 3 dargestellte Hecköffnungssystem eine geteilte Verschlusseinrichtung 3 auf, wobei vorliegend die Verschlusseinrichtung 3 horizontal asymmetrisch geteilt ist und die Verschlusselemente 4 als Heckklappen ausgebildet sind.

Fig. 5 zeigt das Hecköffnungssystem in einer teilweise geöffneten Position. Hierbei ist die obere Heckklappe, welche um eine horizontale Drehachse schwenkbar mit der Rahmenvorrichtung verbunden ist, nach oben geschwenkt. Die untere Heckklappe ist verschlossen. Auf diese Weise ist die Öffnung 5 zum Teil zugänglich, insbesondere lassen sich so sperrige Gegenstände in dem KFZ transportieren oder einladen, welche aufgrund ihres Platzbedarfes ansonsten nicht in dem Stauraum des KFZ untergebracht werden können.

Fig. 6 zeigt das erfindungsgemäße Hecköffnungssystem in einer komplett geöffneten Position, wobei beide Heckklappen um ihre horizontalen Drehachsen geschwenkt sind, und somit ein voller Zugriff durch die Öffnung 5 auf den Stau- bzw. Laderaum gewährleistet ist. Die obere Heckklappe, welche im oberen Bereich des Heckbereichs bzw. der Rahmenvorrichtung gelenkig gekoppelt ist, ist dabei wie in Fig. 5 nach oben geschwenkt. Die untere Heckklappe, welche in einem unteren Bereich des Heckbereichs bzw. der Rahmenvorrichtung gelenkig gekoppelt ist, ist nach unten geschwenkt.

Fig. 7 zeigt das Hecköffnungssystem ebenfalls in einer komplett geöffneten Position, wobei hier jedoch die gesamte Rahmenvorrichtung 7 um eine horizontale Drehachse nach oben geschwenkt ist, wobei die einzelnen Verschlusselemente nicht geöffnet sind. Möglich wäre hier auch, dass die Rahmenvorrichtung nicht um eine horizontal schwenkbare Achse an den Karosseriebereich gekoppelt ist, sondern dass eine schwenkbare Kopplung an den Karosseriebereich über eine senkrechte Drehachse erfolgen könnte. Auch ist eine drehbare Kopplung denkbar.

### Bezugszeichenliste

- **1**: Hecköffnungssystem
- **2**: Heckbereich
- **3**: Verschlusseinrichtung
- **4**: Verschlusselemente
- **5**: Öffnung
- **6**: Gelenke
- **6 a**: erste Gelenke
- **6 b**: zweite Gelenke
- **7**: Rahmenvorrichtung

## Patentansprüche

1. Hecköffnungssystem (1) für ein Kraftfahrzeug, umfassend
einen Heckbereich (2) mit einer durch einen Karosseriebereich umgebenden, zu verschließenden Öffnung (5),
mindestens eine mit dem Heckbereich (2) koppelbare Verschlusseinrichtung (3) mit mindestens einem Verschlusselement (4) ausgewählt aus der Gruppe umfassend Hecktüren, Heckklappen und dergleichen, zum Öffnen bzw. Verschließen der Öffnung (5) des Heckbereichs, wobei zwischen Verschlusseinrichtung (3) und Heckbereich (2) eine Rahmenvorrichtung (7) bewegbar an dem Heckbereich (2) gekoppelt angeordnet ist, über welchen die Verschlusseinrichtung (3) mit dem Heckbereich (2) gekoppelt ist, um ein Öffnen bzw. Verschließen der Öffnung (5) über ein Bewegen der Rahmenvorrichtung (7) und/oder des Verschlusselements (4) zu realisieren, wobei die Rahmenvorrichtung (7) über mindestens ein erstes Gelenk (6, 6a) umfassend Scharnierelemente und dergleichen bewegbar an den Karosseriebereich gekoppelt ist und die Verschlusseinrichtung (3) über mindestens ein zweites Gelenk (6, 6b) umfassend Scharnierelemente und dergleichen bewegbar an die Rahmenvorrichtung (7) gekoppelt ist,
**dadurch gekennzeichnet, dass**
das erste Gelenk (6a) eine in eine andere Richtung ausgebildete Drehachse aufweist als das zweite Gelenk (6b).

2. Hecköffnungssystem (1) nach Anspruch 1,
**dadurch gekennzeichnet, dass**
das erste Gelenk (6a) als Scharnierelement ausgebildet ist, welches an einem oberen bzw. unteren Bereich des Karosseriebereichs angeordnet ist, um ein Schwenken der Rahmenvorrichtung (7) nach oben bzw. nach unten zu realisieren.

3. Hecköffnungssystem (1) nach Anspruch 1 oder 2,
**dadurch gekennzeichnet, dass**
das zweite Gelenk (6b) als Scharnierelement ausgebildet ist, welches an einem seitlichen Bereich des Karosseriebereichs angeordnet ist, um ein Schwenken der Rahmenvorrichtung (7) zur Seite zu realisieren.

4. Hecköffnungssystem (1) nach einem der vorherigen Ansprüche 1 bis 3,
**dadurch gekennzeichnet, dass**
das erste und/oder das zweite Scharnierelement (6a, 6b) ausgewählt ist aus der Gruppe der Scharniere umfassend eindrehende als auch aushebende Scharniere.

5. Hecköffnungssystem (1) nach einem der vorherigen Ansprüche 1 bis 4,
**dadurch gekennzeichnet, dass**
die Verschlusseinrichtung (3) eine Teilung durch mindestens zwei Verschlusselemente (4) umfasst.

6. Hecköffnungssystem (1) nach einem der vorherigen Ansprüche 1 bis 5,
**dadurch gekennzeichnet, dass**
die Teilung der Verschlusseinrichtung (3) horizontal, vertikal, symmetrisch und/oder asysmmetrisch ausgebildet sein kann.

7. Hecköffnungssystem (1) nach einem der vorherigen Ansprüche 1 bis 6,
**dadurch gekennzeichnet, dass**
das Verschlusselement (4) als umgreifendes und/oder als eingelegtes Verschlusselement () ausgebildet ist.

8. Hecköffnungssystem (1) nach einem der vorherigen Ansprüche 1 bis 7,
**dadurch gekennzeichnet, dass**
jedes Verschlusselement (4) einzeln bewegbar an der Rahmenvorrichtung (7) gekoppelt ist.

9. Kraftfahrzeug umfassend einen Hecköffnungssystem (1) gemäß einem der vorherigen Ansprüche 1 bis 8.

## Claims

1. A rear opening system (1) for a motor vehicle, comprising a rear area (2) with an opening (5) to be closed which is enclosed by a region of the body, at least one locking device (3) which can be coupled with the rear area (2) and comprises at least one locking element (4) chosen from the group comprising a tailgate, rear flap and the like, for opening and closing the opening (5) of the rear area, with a frame apparatus (7) being arranged to be coupled in a moveable manner on the rear area (2) between the locking device (3) and the rear area (2), through which the locking device (3) is coupled with the rear area (2) in order to realize an opening or closing of the opening (5) via a movement of the frame apparatus (7) and/or the locking element (4), with the frame apparatus (7) being coupled to be movable with the body area via at least one joint (6, 6a) comprising hinge elements and the like, and the locking device (3) being coupled to be movable with the frame apparatus (7) via at least one second joint (6, 6b) comprising hinge elements and the like, **characterized in that** the first joint (6a) comprises a rotational axis arranged in another direction than the second joint (6b).

2. A rear opening system (1) according to claim 1, **characterized in that** the first joint (6a) is arranged as a hinge element which is arranged at an upper and bottom region of the body area in order to realize a pivoting of the frame apparatus (7) upwardly and downwardly.

3. A rear opening system (1) according to claim 1 or 2, **characterized in that** the second joint (6b) is arranged as a hinge element which is arranged on a lateral area of the body area in order to realize a pivoting of the frame apparatus (7) to the side.

4. A rear opening system (1) according to one of the preceding claims 1 to 3, **characterized in that** the first and/or the second hinge element (6a, 6b) is chosen from the group of hinges comprising inward-turning and lifting hinges.

5. A rear opening system (1) according to one of the preceding claims 1 to 4, **characterized in that** the locking device (3) comprises a division by at least two locking elements (4).

6. A rear opening system (1) according to one of the preceding claims 1 to 5, **characterized in that** the division of the locking device (3) can be arranged to be horizontal, vertical, symmetrical and/or asymmetrical.

7. A rear opening system (1) according to one of the preceding claims 1 to 6, **characterized in that** the locking element (4) is arranged as an encompassing or inserted locking element.

8. A rear opening system (1) according to one of the preceding claims 1 to 7, **characterized in that** each locking element (4) is coupled to be individually movable on the frame apparatus (7).

9. A motor vehicle, comprising a rear opening system (1) according to one of the preceding claims 1 to 8.

## Revendications

1. Système d'ouverture à l'arrière (1) pour un véhicule à moteur, comprenant
une zone arrière (2) avec une ouverture (5) à fermer entourée d'une zone de carrosserie,
au moins un dispositif de fermeture (3) pouvant être couplé avec la zone arrière (2) avec au moins un élément de fermeture (4), choisi parmi les portes arrière, capots arrière et similaires, pour ouvrir et fermer l'ouverture (5) de la zone arrière, dans lequel est disposé couplé de façon mobile sur la zone arrière (2) entre le dispositif de fermeture (3) et la zone arrière (2) un dispositif de cadre (7) par lequel le dispositif de fermeture (3) est couplé avec la zone arrière (2) pour réaliser une ouverture ou une fermeture de l'ouverture (5) par un déplacement du dispositif de cadre (7) et/ou de l'élément de fermeture (4), dans lequel le dispositif de cadre (7) est couplé de façon mobile à la zone de carrosserie par au moins une première articulation (6, 6a) comprenant des charnières ou similaires et le dispositif de fermeture (3) est couplé de façon mobile au dispositif de cadre (7) par au moins une deuxième articulation (6, 6b) comprenant des éléments de charnière ou similaires,
**caractérisé en ce que** la première articulation (6a) présente un axe de rotation formé dans une autre direction que la deuxième articulation (6b).

2. Système d'ouverture à l'arrière (1) selon la revendication 1, **caractérisé en ce que** la première articulation (6a) est conformée comme un élément de charnière qui est disposé sur une zone supérieure ou inférieure de la zone de carrosserie pour réaliser un pivotement du dispositif de cadre (7) vers le haut ou vers le bas.

3. Système d'ouverture à l'arrière (1) selon la revendication 1 ou 2, **caractérisé en ce que** la deuxième articulation (6b) est conformée comme un élément de charnière qui est disposé sur une zone latérale de la zone de carrosserie pour réaliser un pivotement du dispositif de cadre (7) vers le côté.

4. Système d'ouverture à l'arrière (1) selon l'une des revendications 1 à 3, **caractérisé en ce que** le premier élément de charnière et/ou le deuxième (6a, 6b) sont choisis parmi le groupe des charnières comprenant des charnières pivotantes ou à soulèvement.

5. Système d'ouverture à l'arrière (1) selon l'une des revendications 1 à 4, **caractérisé en ce que** le dispositif de fermeture (3) comprend une division par au moins deux éléments de fermeture (4).

6. Système d'ouverture à l'arrière (1) selon l'une des revendications 1 à 5, **caractérisé en ce que** la division du dispositif de fermeture (3) peut être horizontale, verticale, symétrique et/ou asymétrique.

7. Système d'ouverture à l'arrière (1) selon l'une des revendications 1 à 6, **caractérisé en ce que** l'élément de fermeture (4) est conformé comme un élément de fermeture à recouvrement et/ou inséré.

8. Système d'ouverture à l'arrière (1) selon l'une des revendications 1 à 7, **caractérisé en ce que** chaque élément de fermeture (4) est couplé sur le dispositif de cadre (7) de façon à être mobile séparément.

9. Véhicule à moteur comprenant un système d'ouverture à l'arrière (1) selon l'une des revendications 1 à 8.
